# EUROPÄISCHE PATENTSCHRIFT

(11) **EP 4 232 942 B1**
(45) Veröffentlichungstag und Bekanntmachung des Hinweises auf die Patenterteilung: **25.09.2024**
(21) Anmeldenummer: 21840006.7
(22) Anmeldetag: 17.12.2021
(51) Int. Cl.: G06K 7/08, G06K 19/067

(54) **VERFAHREN ZUR ERKENNUNG EINES OBJEKTES AUF EINEN KAPAZITIVEN TOUCH-SENSOR, OBJEKT UND ERFASSUNGSSYSTEM**
METHOD FOR DETECTING AN OBJECT ON A CAPACITIVE TOUCH SENSOR, OBJECT AND DETECTION SYSTEM
PROCÉDÉ DE DÉTECTION D'UN OBJET SUR UN CAPTEUR TACTILE CAPACITIF, OBJET ET SYSTÈME DE DÉTECTION

(30) Priorität: 04.02.2021 EP 21155252
(43) Veröffentlichungstag der Anmeldung: 30.08.2023
(73) Patentinhaber: Siemens Aktiengesellschaft, 80333 München (DE)
(72) Erfinder: LOPEZ PADILLA, Diego Gerardo, 90459 Nürnberg (DE)
(74) Vertreter: Siemens Patent Attorneys
(86) Internationale Anmeldenummer: PCT/EP2021/086573
(87) Internationale Veröffentlichungsnummer: WO 2022/167139

(56) Entgegenhaltungen:
- EP-A2- 2 722 789
- EP-B1- 2 635 996

## Beschreibung

Die Erfindung betrifft ein Verfahren zur Erkennung eines Objektes auf einem kapazitiven Touch-Sensor eines Bedienterminals, wobei das Objekt ein Identifizierungsmittel aufweist, wodurch eine erkennbare Information bereitgestellt wird, wobei mittels des Touch-Sensors das Identifizierungsmittel als Touch-Sensordaten erkannt wird, und die Touch-Sensordaten an eine Auswerteeinheit weitergeleitet werden, wobei in der Auswerteeinheit anhand der Touch-Sensordaten die Information des Identifizierungsmittels ermittelt wird.

Auch betrifft die Erfindung ein Objekt, ausgestaltet zum Auflegen auf einen kapazitiven Touch-Sensor eines Bedienterminals umfassend, ein Identifizierungsmittel, welches ausgestaltet ist, eine für den Touch-Sensor erkennbare Information bereit zu stellen.

Des Weiteren betrifft die Erfindung ein Erfassungssystem aufweisend ein Bedienterminal mit einem kapazitiven Touch-Sensor und einem Objekt.

Nach dem gebräuchlichen Fachwissen sind im Stand der Technik für eine Objekterkennung der RFID, QR-Code und Barcodes bekannt. QR-Codes und Barcodes werden beispielsweise über eine Scannerkasse gezogen, beispielsweise in Supermärkten beim Einkauf von Lebensmittel, das Einkaufs-Objekt wird mit seiner ID erkannt und kann automatisch in einer Kasse verbucht werden. Die RFID-Technik, insbesondere die NFC (Near Field Communication) hat sich heute bereits beliebter Weise als Zahlungsmethode etabliert.

Die EP 2 722 789 A2 offenbart eine Sensoranordnung zur Erkennung eines Datenträgers auf einem Touch-Screen.

Die EP 2 635 996 B1 zeigt einen kapazitiven Flächensensor, welcher es ermöglicht eine "Touch-Struktur" von Objekten zu erkennen.

Der Erfindung liegt die Aufgabe zugrunde, die bereits bekannten Objekterkennungsverfahren und Vorrichtungen zu verbessern.

Die Aufgabe wird für das eingangs genannte Verfahren dadurch gelöst, dass das Identifizierungsmittel eine aus einem leitfähigen Stoff erzeugte Zeichnung umfasst, und die Zeichnung Formen aufweist, welche durch eine Verbindungslinie verbunden sind, wobei das Objekt derart auf dem Touch-Sensor aufgelegt wird, dass die Zeichnung flächig auf dem Touch-Sensor aufliegt, und der Touch-Sensor dadurch die Formen als Berührpunkte erkennt, wobei die Anordnung der Formen und dadurch die erkannten Berührpunkte die Information wiedergibt.

Bei dem Verfahren ist es vorgesehen, in der Auswerteeinheit ein Algorithmus zu betreiben, welche anhand der Touch-Sensordaten die Objekterkennung lernt und erkannte Objekte abspeichert, wobei der Algorithmus derart betrieben wird, dass eine charakteristische Beziehung der Berührpunkte zueinander ermittelt wird, wodurch es möglich wird, dass Identifizierungsmittel bzw. dessen erkennbare Information anhand der charakteristischen Beziehung an einer beliebige Stelle auf den Touch-Sensor zu erkennen.

Die eingeführte künstliche Intelligenz bzw. der Algorithmus, der in der Auswerteeinheit läuft, könnte unterstützt werden mit neuronalen Netzen oder mit selbstorganisierenden Karten, welche die Muster erlernen und in der Karte abspeichern. Als selbstorganisierende Karten bezeichnet man eine Art von künstlichen neuronalen Netzen, die in der Lage sind, ein überwachtes Lernverfahren einzusetzen.

Vorzugsweise werden nun mit dem in der Zeichnung enthaltenen Formen Berührpunkte simuliert, welche normalerweise auf dem Touch-Screen durch Berühren mit dem Finger entstehen. Da die in der Zeichnung enthaltenen Formen, welche die Berührpunkte nachbilden, in einem bestimmten Verhältnis/Beziehung/Relation zu einander stehen, kann man aus diesem typischen eindeutigen Muster die Information ableiten.

Weiterhin ist es von Vorteil, wenn die Objekte jeweils einen Kontaktpunkt aufweisen, und dieser Kontaktpunkt bei dem flächigen Auflegen auf dem Touch-Sensor mit einem Teil einer menschlichen Hand eines Bedieners berührt wird. Insbesondere bei Touch-Sensoren mit einer nicht stark ausgeprägten Empfindlichkeit für Multi Touch-Erfassung, kann es hilfreich sein, wenn die Zeichnung und damit die über Verbindungslinien verbundenen Formen, welche vorzugsweise aus einer leitenden Tinte bestehen, gleichzeitig mit einer menschlichen Hand über einen Kontaktpunkt in Verbindung stehen. Die Kapazität eines menschlichen Körpers ist ausreichend um dann, selbst bei nicht so empfindlichen Touch-Screens, das Muster der Zeichnung zu erkennen.

Das Verfahren kann vorteilhafter Weise eingesetzt werden, bei einem Bedienterminal, welches eine Benutzererkennung verwaltet und die Erkennung eines Objektes als eine Authentifizierung eines Benutzers ausgewertet wird.

Auch ist denkbar das Verfahren für eine Produkterkennung einzusetzen, wobei das Bedienterminal eingerichtet ist, eine Produktermittlung zu verwalten und die Erkennung des Objektes genutzt wird, ein Produkt zu ermitteln, wobei die erkannte Information als ein Produktcode ausgewertet wird.

Gegenüber einem bekannten QR-Code ist es bei der verfahrensgemäßen Erfindung von besonderem Vorteil, wenn für den leitfähigen Stoff der Zeichnung eine leitfähige Tinte verwendet wird, vorzugsweise wird eine unsichtbare, leitfähige Tinte verwendet. So ist es nicht mehr möglich, wie zuvor der QR-Code einfach abzufotografieren.

Ein Objekt ist ausgestaltet zum Auflegen auf einen kapazitiven Touch-Sensor eines Bedienterminals umfassend, ein Identifizierungsmittel, welches ausgestaltet ist, eine für den Touch-Sensor erkennbare Information bereit zu stellen, dabei weist das Identifizierungsmittel eine einen leitfähigen Stoff aufweisende Zeichnung auf, welche Formen aufweist, welche durch eine Verbindungslinie verbunden sind, wobei das Objekt zumindest eine Fläche aufweist, in welcher die Zeichnung angeordnet ist.

Bei dem Objekt ist eine Seite beispielsweise flächig ausgestaltet, so dass diese Fläche auf einem Touch-Sensor auflegbar ist, wobei dann die Zeichnung flächig auf dem Touch-Sensor aufliegt, und dadurch die Formen von dem Touch-Sensor erkannt werden können. In einer ersten Ausgestaltungsvariante kann das Objekt als eine ID-Card, Scheck-Karte oder Service-Karte ausgestaltet sein, mit welcher sich ein Benutzer an einen Bedienterminal anmelden kann oder identifizieren kann.

In einer zweiten Ausgestaltung kann das Objekt als ein Flyer ausgestaltet sein, die Zeichnung mit der leitenden Tinte wäre dann auf dem oder in den Flyer unsichtbar integriert und ein Flyer könnte auf den Touch-Screen gelegt werden und es gibt so über das Bedienterminal weiterführende Informationen über den Flyer.

In einer dritten Ausgestaltungsvariante kann das Objekt in einer Umverpackung eines Produktes integriert sein und so über ein Kassensystem mit einem Touch-Sensor registriert werden.

Um die Empfindlichkeit bei dem Objekt für eine Registrierung auf dem Touch-Sensor zu erhöhen, ist ein Objekt mit einem Kontaktpunkt ausgestaltet, und dieser Kontaktpunkt ist ausgestaltet, von einer menschlichen Hand eines Bedieners berührt zu werden. Dies bietet den Vorteil, dass eine Kapazität eines menschlichen Körpers, welche beispielsweise im Bereich von 100 pF bis 300 pF liegt, ausgenutzt werden kann.

Auch betrifft die Erfindung ein Erfassungssystem aufweisend ein Bedienterminal mit einem kapazitiven Touch-Sensor, wobei ein Objekt zum Auflegen auf dem Touch-Sensor zur Erkennung genutzt wird. Dabei ist das Objekt zum Auflegen auf den Touch-Sensor ausgestaltet und es weist ein zusätzliches Identifizierungsmittel auf, welches wiederum ausgestaltet ist, eine für den Touch-Sensor erkennbare Information bereitzustellen, dabei weist das Identifizierungsmittel eine einen leitfähigen Stoff aufweisende Zeichnung auf, welche Formen aufweist, welche durch eine Verbindungslinie verbunden sind, wobei das Objekt zumindest eine Fläche aufweist, in welcher die Zeichnung angeordnet ist. Dabei ist der Touch-Sensor weiterhin dazu ausgestaltet, das Identifizierungsmittel als Touch-Sensordaten zu ermitteln, wenn das Objekt auf den Touch-Sensor aufgelegt wird und die Zeichnung flächig auf dem Touch-Sensor aufliegt, und der Touch-Sensor dadurch die Formen als Berührpunkte erkennt, weiterhin ist eine Auswerteeinheit vorhanden, welche anhand der Touch-Sensordaten, die Informationen ermittelt, wobei die Auswerteeinheit anhand der erkannten Berührpunkte die Informationen ermittelt.

Das Erfassungssystem weist dabei einen Algorithmus auf, welcher in der Auswerteeinheit betrieben wird, dieser Algorithmus wird anhand der Touch-Sensordaten die Objekterkennung erlernen und erkannte Objekte abspeichern, wobei der Algorithmus derart betrieben wird, dass eine charakteristische Beziehung der Berührpunkte zueinander ermittelt wird, wodurch es möglich wird, das Identifizierungsmittel bzw. dessen erkennbare Information anhand der charakteristischen Beziehung an einer beliebigen Stelle auf dem Touch-Sensor zu erkennen.

In einer weiterführenden Ausgestaltung ist das Erfassungssystem dahingehend erweitert, dass die Objekte jeweils einen Kontaktpunkt aufweisen, und dieser Kontaktpunkt bei dem flächigen Auflegen auf dem Touch-Sensor mit einem Teil einer menschlichen Hand eines Bedieners berührt wird.

Im Hinblick auf eine Benutzeridentifizierung für eine industrielle Anlage, ist das Erfassungssystem mit Vorteil dazu ausgestaltet, dass das Bedienterminal ein Benutzererkennungs-Mittel aufweist, um eine Benutzererkennung zu verwalten und die Erkennung eines Objektes als eine Authentifizierung eines Benutzers auszuwerten.

Im Hinblick auf ein zukünftiges Kassensystem oder auf eine Produktermittlung in einer Fertigung ist das Erfassungssystem vorteilhafter Weise dazu ausgestaltet, dass das Bedienterminal ein Produktermittlungs-Mittel aufweist, um eine Produktermittlung zu verwalten und die Erkennung des Objektes genutzt wird, ein Produkt zu ermitteln, wobei die erkannte Information als ein Produktcode ausgewertet wird.

Die Zeichnung zeigt ein Ausführungsbeispiel der Erfindung, dabei zeigt die
- FIG 1: das Ausführungsprinzip mit einem Objekt aus leitender Tinte,
- FIG 2: eine Ausgestaltungsvariante eines weiteren Objektes mit leitender Tinte,
- FIG 3: noch eine weitere Ausgestaltung eines Objektes,
- FIG 4: ein Erfassungssystem mit einem Bedienterminal und
- FIG 5: ein in einem Transportweg eingelassener TouchScreen.

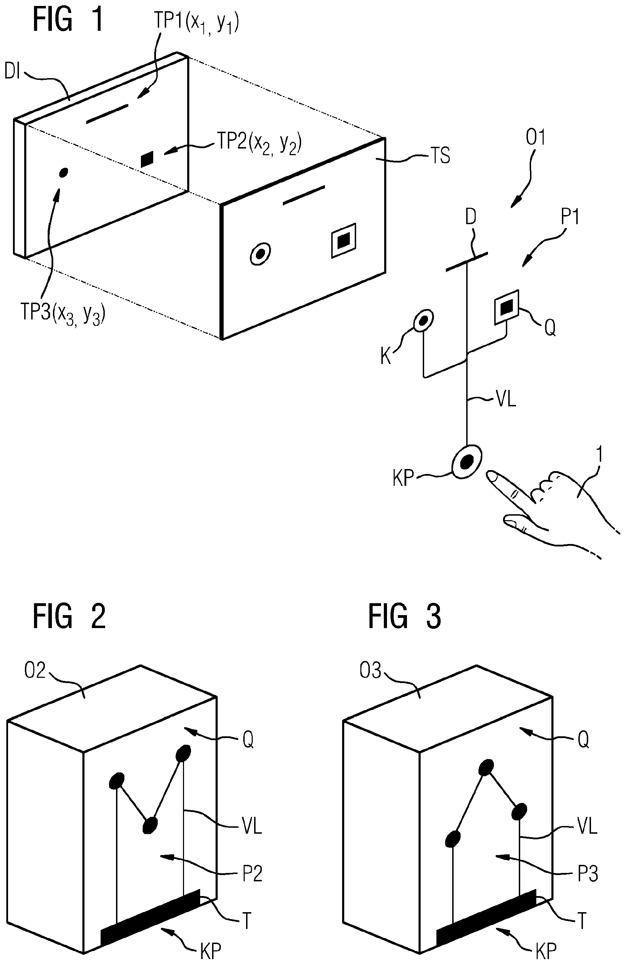

Gemäß FIG 1 ist in einer perspektivischen Explosionszeichnungsdarstellung ein Display DI, ein Touch-Sensor TS und ein erstes Objekt O1 dargestellt. Das Display DI ist beispielsweise als ein LC-Display ausgestaltet und der Touch-Sensor TS ist als ein kapazitiver Multitouch-Sensor ausgestaltet. Das Objekt O1 ist schematisch dargestellt und weist eine erste Zeichnung P1 aus einem leitfähigen Stoff auf. Die Zeichnung P1 weist Formen K,Q,D auf, welche durch eine Verbindungslinie VL verbunden sind. Die Zeichnung P1 mit seiner Verbindungslinie VL ist mit einem Kontaktpunkt KP verbunden. Der Kontaktpunkt KP dient bei dem flächigen Auflegen des ersten Objektes O1 auf den Touch-Sensor TS zum Berühren mit einer menschlichen Hand 1 eines Benutzers.

Der Touch-Sensor TS registriert ein Auflegen eines ersten Berührpunktes TP1 mit ersten Berührkoordinaten x₁,y₁. Der erste Berührpunkt TP1 wird durch die erste Form D hervorgerufen. Weiterhin registriert der Touch-Sensor TS einen zweiten Berührpunkt TP2 mit den Berührkoordinaten x₂,y₂. Der zweite Berührpunkt TP2 wird durch die Form Q hervorgerufen. Die Form K erzeugt auf dem Touch-Sensor TS einen dritten Berührpunkt TP3 mit den Berührkoordinaten x₃,y₃.

Die Berührung der menschlichen Hand 1 des Kontaktpunkt KP dient der Verstärkung des kapazitiven Signals, da die natürliche Kapazität des menschlichen Körpers ausgenutzt wird.

Erfindungsgemäß wird das Prinzip ausgenutzt, dass in einem Objekt O1 ein Identifizierungsmittel aus einem leitfähigen Stoff angeordnet ist. In diesem Fall ist eine erste Zeichnung P1 aus einer leitfähigen Tinte dargestellt worden. Die leitfähige Tinte bildet Formen K,Q,D ab, welche durch eine Verbindungslinie verbunden sind. Wird das erste Objekt O1 flächig auf den Touch-Sensor TS aufgelegt, können damit von dem Touch-Sensor TS Berührpunkte TP1,TP2,TP3 erkannt werden, wobei die Koordinaten x₁, y₁;x₂, y₂;x₃, y₃ der Berührpunkte TP1,TP2,TP3 die Information ID des Objektes O1 wiedergibt.

Da sich die Berührpunkte TP1,TP2,TP3 in einen bestimmten Verhältnis/Beziehung oder Relation zueinander befinden, kann diese eindeutige Relation dazu genutzt werden, die Information auch an beliebigen Stellen auf dem Touch-Screen TS wieder zu erkennen.

Die FIG 2 zeigt eine mögliche Ausgestaltung eines Objektes in einer schematischen dreidimensionalen Ansicht. Ein zweites Objekt O2 ist beispielsweise als ein Quader ausgestaltet und auf einer Grundfläche G ist eine zweite Zeichnung P2 aus einer leitfähigen Tinte abgebildet. Die zweite Zeichnung P2 weist im Wesentlichen drei Kreise auf, welche durch die Verbindungslinie VL und den Kontaktpunkt KP miteinander verbunden sind.

Gemäß FIG 3 ist ein drittes Objekt O3 dargestellt, wobei auch das dritte Objekt O3 als ein quaderförmiges Objekt mit einer Grundfläche G ausgestaltet ist. Die aus der leitfähigen Tinte aufgebrachte dritte Zeichnung P3 weist eine andere Informationsstruktur auf, als die in FIG 2 dargestellte zweite Zeichnung P2 und kann damit für eine andere Information bzw. Identität genutzt werden.

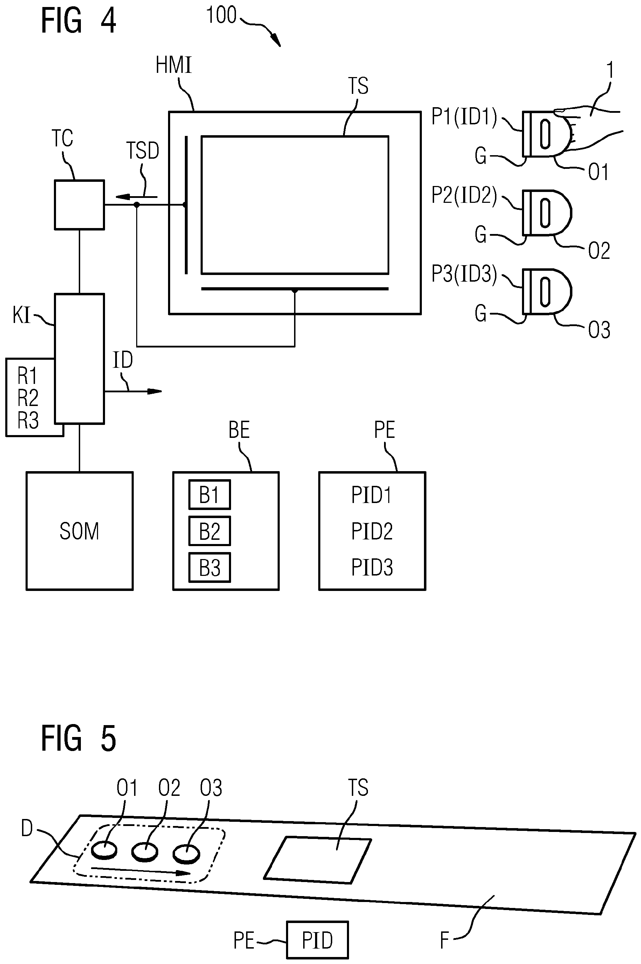

Gemäß der FIG 4 ist ein Erfassungssystem 100 dargestellt. Das Erfassungssystem 100 weist ein Bedienterminal HMI mit einem kapazitiven Touch-Sensor TS auf. Um mit den Touch-Sensor TS Objekte 01,02,03 zu erkennen, stehen für einen Benutzer ein erstes Objekt O1, ein zweites Objekt O2 und ein drittes Objekt O3 bereit. Ein Benutzer kann mit seiner menschlichen Hand 1, beispielsweise das erste Objekt O1 greifen und mit der Grundfläche G des ersten Objektes O1 gegen den Touch-Sensor TS drücken. Der Touch-Sensor TS ist mit einem Touch-Controller TC dazu ausgestaltet, die erste Zeichnung P1 bzw. das darin enthaltene Identifizierungsmittel zu erkennen. Die erste Zeichnung P1 ist ein Strukturgebilde gezeichnet aus leitender Tinte, wobei besonders markante Formen K,Q,D (siehe FIG 1) auf dem Touch-Sensor TS als Berührpunkte erkannt werden. Wird das erste Objekt O1 auf den Touch-Sensor TS aufgelegt und wird die erste Zeichnung P1 flächig auf den Touch-Sensor PS aufgelegt, kann der Touch-Sensor TS dadurch die Formen K,Q,D als Berührkoordinaten x₁, y₁, x₂, y₂, x₃, y₃ erkennen. Der Touch-Sensor TS schickt nun Touch-Sensordaten TSD, welche die Information ID enthalten, über den Touch-Controller TC an eine Auswerteeinheit KI. Die Auswerteeinheit KI kann anhand der erkannten Berührpunkte TP1,TP2,TP3 bzw. dessen Berührkoordinaten x₁, y₁, x₂, y₂, x₃, y₃ die Information ID, welche in dem ersten Objekt O1 steckt, erkennen.

Die Auswerteeinheit KI ist dahin weitergebildet, insbesondere mit einem neuronalen Netz, einen Algorithmus AG zu betreiben, welcher es ermöglicht, von einem erkannten Objekt 01,02,03 eine charakteristische Beziehung R1,R2,R3 der erfassten Berührpunkte TP1,TP2,TP3 zueinander zu ermitteln, wodurch es möglich wird, dass das Identifizierungsmittel bzw. dessen erkennbare Information ID anhand der charakteristischen Beziehung R1,R2,R3 an einer beliebigen Stelle auf dem Touch-Sensor TS zu erkennen ist.

Demnach gibt das erste Objekt O1 mit der ersten Zeichnung P1 eine charakteristische Beziehung R1 wieder, das zweite Objekt O2 mit der zweiten Zeichnung P2 gibt eine zweite charakteristische Beziehung R2 wieder und das dritte Objekt O3 mit der dritten Zeichnung P3 gibt eine dritte charakteristische Beziehung R3 wieder. An die Auswerteeinheit KI kann zugunsten eines Erkennungs- und Lernverfahrens weiterhin eine selbstorientierte neuronale Karte SOM angeschaltet sein.

Wir das Erfassungssystem 100 für eine Benutzererkennung genutzt, so weist das Bedienterminal HMI zusätzlich ein Benutzererkennungs-Mittel BE auf, um eine Benutzererkennung zu verwalten und die Erkennung eines Objektes 01,02,03 als eine Authentifizierung eines Benutzers auszuwerten.

Wird das Erfassungssystem 100 für eine Produktermittlung genutzt, so weist das Bedienterminal HMI ein Produktermittlungs-Mittel PE auf, um eine Produktermittlung zu verwalten und die Erkennung des Objektes 01,02,03 wird genutzt, ein Produkt P zu ermitteln, wobei die erkannte Information ID als ein Produkt-Code PID ausgewertet wird.

Gemäß FIG 5 ist beispielhaft ein Förderweg F dargestellt, auf denen verschiedene Produkte P in Form eines ersten Objektes O1, eines zweiten Objektes O2 und eines dritten Objektes O3 in Pfeilrichtung befördert werden. Die Produkte P werden dann nacheinander über den Touch-Sensor TS geführt, wobei durch Zuhilfenahme des mit FIG 4 dargestellten Erfassungssystem 100 im Modus Produktermittlung die Produkt-IDs PID der einzelnen Produkte P respektive Objekte 01,02,03 erkannt werden können.

Weitere die Erfindung betreffende Gedanken sind folgende: Mit einem Muster mit transparenter leitfähiger Tinte ist es möglich, ein einzigartiges Muster mit künstlichen neuronalen Netzwerken zu identifizieren, indem man es gleichzeitig mit der Hand gegen einen Multitouch-Bildschirm drückt. Die Kapazität des menschlichen Körpers kann zusätzlich genutzt werden. Durch die Möglichkeit, einzigartige Muster zu erkennen, öffnet diese Erfindung die Tür zu neuen Möglichkeiten, Objekte zuverlässiger, effektiver und billiger zu identifizieren als herkömmliche Systeme wie RFID, QR-Code und Barcodes.

Um ein zuverlässiges Erkennen eines Musters zu realisieren, ist es erforderlich, den Benutzern zu ermöglichen, ein leitfähiges Muster frei zu scannen, ohne dass sie das leitfähige Farbkreismuster in einer bestimmten x- und y-Koordinate des Multitouch-Bildschirms lokalisieren müssen. Dazu kann die Verwendung eines künstlichen Neuronalen Netzwerks verwendet werden, um die Erkennung mehrerer Muster in jeder x- und y-Koordinate zu ermöglichen.

Es gibt viele Anwendungsfälle, die mit dieser Erfindung erreicht werden können. Bei den Anwendungsfällen ist zu beachten, dass die leitfähige Tinte beispielsweise an Kartons, ID-Karten, Produktheften usw. haftet bzw. aufgedruckt ist.
a) Produktionsartikelverfolgung. Der Benutzer scannt einen Artikel (z.B. Werksartikel, Amazon-Lieferbox, Medizinbox, Buch, etc.) und das System ist in der Lage, die Beschreibung des spezifischen Artikels zu finden, z. B. wo und wann es hergestellt wurde. Dieser Anwendungsfall ist auch für Artikelerfassungen und Datenvervollständigungen praktisch. Wenn beispielsweise eine Lieferbox eines Geräts gescannt wird, zeigt das System seine Seriennummer, Hardware-Spezifikation und Firmware-Version sowie die Bedienungsanleitung an.
b) Authentifizierung. Durch scannen einer ID-Karte kann der Benutzer auf seine Daten zugreifen und erhält seine relevanten Informationen, wie die nächsten Aufgaben, Produktionslinienergebnisse usw. sind.
c) Digitaler Zugriff. Das System kann eine bestimmte Website wie ein Benutzerhandbuch PDF, Kontaktinformationsseite, Feedback-Formular, Kartenstandort, etc. öffnen, indem es einen Artikel wie ein Produktheft, einen Flyer, eine Visitenkarte scannt. Wenn ein Gerät über GPS oder andere Sensoren verfügt, können diese verwendet werden, um die Benutzererfahrung zu verbessern, z. B. kann ein mobiles Gerät die Karten-App mit der Route zu einem Wunschplatz öffnen.
d) Personalisierte Kartenanfrage. Bestimmte Karten mit programmierten Aktionen können verwendet werden, die ein bestimmtes Ziel haben, z. B. durch Scannen einer Support-Karte, das System weiß, wer und wo ein Benutzer eine Karte gescannt hat, und kann den Verantwortlichen für diese spezifische Betriebslinie benachrichtigen.

Vorteile:
- Normalerweise hat eine Fabrik Displays, aber keine Tastaturen oder Zeigergeräte. Für diese Erfindung ist keines von ihnen erforderlich, was die Interaktion mit dem System schneller macht.
- Mit der Verwendung anderer Sensoren wie GPS, die in mobilen Geräten enthalten sind, kann ein Benutzer Zeit sparen, indem er Routen zu bestimmten Zielen findet.
- Reduzieren der Zeit für manuelle Eingaben von Informationen in das System. Diese Erfindung kann gleichzeitig Aktionen auslösen und Abfragedaten auslösen, die einem einzelnen Muster zugeordnet sind.
- Reduzieren der Zeit der manuellen Suche nach Systemdaten, wie z. B. Öffnen einer App, Login/Logout, Start/Stopp einer Laufzeit.
- Die Daten werden sofort auf demselben Bildschirm angezeigt, auf dem ein gescannter Vorgang stattgefunden hat, wodurch die Betriebszeit verkürzt wird, auch dies verbessert die Benutzererfahrung nach dem WYSIWYG-Prinzip (What You See Is What You Get).
- Es ist keine zusätzliche Hardware erforderlich, da jedes Multitouch-Display verwendet werden kann, einschließlich alter Industriedisplays, mobiler Geräte oder Tablets.
- Die Kosten für dieses System sind geringer als bei RFID-Sensoren und -Tags, da kein zusätzlicher Sensor und Tags erforderlich sind.
- Die Kosten für das hier vorgestellte leitfähige Tintensystem sind auch geringer als bei QR-Codes, da keine Kamera benötigt wird.
- Das System kann mit Web-Technologien (JavaScript) implementiert werden, die in jedem Webbrowser ausgeführt werden. Dies macht die Implementierung plattformübergreifend.
- Die leitfähigen Muster können mit herkömmlichen Druckern gedruckt werden, sodass jeder Wunsch intuitiv und schnell integriert werden kann.
- Diese Erfindung ermöglicht es, Aktionen wie Benachrichtigung anderer Systeme, Start/Stopp-Maschinen, Start/Stopp einer Laufzeit, Erhöhung/Abnahme der Tag-Werte von Sensoren, Anrufe, etc. auszulösen.
- Mit einer transparenten leitfähigen Tinte können die Schaltungsmuster auf Oberflächen platziert werden, ohne sonstige Darstellungen zu beeinflussen.

Sicherheit:
- Das Zusammenspiel einer Person ist erforderlich, damit diese Erfindung funktioniert.
- Ein QR-Code-System kann einfach fotografiert und über das Internet geteilt werden, um für jedermann zugänglich zu sein. Mit dieser Erfindung gibt es keine Möglichkeit, dies zu tun.
- Ein RFID-System kann ohne Zustimmung einer Person ausgelöst werden. Mit dieser Erfindung ist dies nicht möglich.
- Um eine Replikation der Muster zu vermeiden, ist eine transparente leitfähige Tinte vorgesehen.

## Patentansprüche

1. Verfahren zur Erkennung eines Objektes (01,02,03) auf einem kapazitiven Touch-Sensor (TS) eines Bedienterminals (HMI), wobei das Objekt (01,02,03) ein Identifizierungsmittel aufweist, wodurch eine erkennbare Information (ID) bereitgestellt wird, wobei mittels des Touch-Sensors (TS) das Identifizierungsmittel als Touch-Sensordaten (TSD) erkannt wird, und die Touch-Sensordaten (TSD) an eine Auswerteeinheit (KI) weitergeleitet werden, wobei in der Auswerteeinheit (KI) anhand der Touch-Sensordaten (TSD) die Information (ID) des Identifizierungsmittel ermittelt wird,
wobei das Identifizierungsmittel eine aus einem leitfähigen Stoff erzeugte Zeichnung (P1,P2,P3) umfasst, und die Zeichnung (P1,P2,P3) Formen (K,Q,D) aufweist, welche durch eine Verbindungslinie (VL) verbunden sind, wobei das Objekt (01,02,03) derart auf den Touch-Sensor (TS) aufgelegt wird, das die Zeichnung (P1,P2,P3) flächig auf dem Touch-Sensor (TS) aufliegt, und der Touch-Sensor (TS) dadurch die Formen (K,Q,D) als Berührpunkte (x₁, y₁, x₂, y₂, x₃, y₃) erkennt, wobei die Anordnung der Formen (K,Q,D) und damit die erkannten Berührpunkte (x₁, y₁, x₂, y₂, x₃, y₃) die Information (ID) wiedergibt, **dadurch gekennzeichnet, dass** in der Auswerteeinheit (KI) ein Algorithmus (AG) betrieben wird, welcher anhand der Touch-Sensordaten (TSD) die Objekterkennung lernt und erkannte Objekte (01,02,03) abspeichert, wobei der Algorithmus (AG) derart betrieben wird, dass eine charakteristische Beziehung (R) der Berührpunkte (x₁, y₁, x₂, y₂, x₃, y₃) zueinander ermittelt wird, wodurch es möglich wird, das Identifizierungsmittel bzw. dessen erkennbare Information (ID) anhand der charakteristischen Beziehung (R1,R2,R3) an einer beliebigen Stelle auf dem Touch-Sensor (TS) zu erkennen.

2. Verfahren nach Anspruch 1, wobei die Objekte (01,02,03) jeweils einen Kontaktpunkt (KP) aufweisen, und dieser Kontaktpunkt (KP) bei dem flächigen Auflegen auf den Touch-Sensor (TS) mit einem Teil einer menschlichen Hand (1) eines Bedieners berührt wird.

3. Verfahren nach Anspruch 1 oder 2, wobei das Bedienterminal (HMI) eingerichtet ist, eine Benutzererkennung zu verwalten und die Erkennung eines Objektes (01,02,03) als eine Authentifizierung eines Benutzers (B1,B2) auszuwerten.

4. Verfahren nach einem der Ansprüche 1 bis 3, wobei das Bedienterminal (HMI) eingerichtet ist, eine Produktermittlung zu verwalten und die Erkennung des Objektes (01,02,03) genutzt wird ein Produkt (P) zu ermitteln, wobei die erkannte Information (ID) als ein Produktcode (PID) ausgewertet wird.

5. Verfahren nach einem der Ansprüche 1 bis 4, wobei für den leitfähigen Stoff der Zeichnung (P1,P2,P3) eine leitfähige Tinte (T) verwendet wird.

6. Erfassungssystem (100) aufweisend
- ein Bedienterminal (HMI) mit einem kapazitiven Touch-Sensor (TS),
- ein Objekt (01,02,03),
- wobei das Objekt (01,02,03) zum Auflegen auf den Touch-Sensor (TS) ausgestaltet ist und ein Identifizierungsmittel aufweist, welches ausgestaltet ist eine für den Touch-Sensor (TS) erkennbare Information (ID) bereitzustellen, dabei weist das Identifizierungsmittel eine einen leitfähigen Stoff aufweisende Zeichnung (P1,P2,P3) auf, welche Formen (K,Q,D) aufweist, welche durch eine Verbindungslinie (VL) verbunden sind, wobei das Objekt (01,02,03) zumindest eine Fläche (G) aufweist, in welcher die Zeichnung(P1,P2,P3) angeordnet ist,
wobei der Touch-Sensor (TS) weiterhin ausgestaltet ist das Identifizierungsmittel als Touch-Sensordaten (TSD) zu ermitteln, wenn das Objekt auf den Touch-Sensor (TS) aufgelegt wird und die Zeichnung (P1,P2,P3) flächig auf dem Touch-Sensor (TS) aufliegt, und der Touch-Sensor (TS) dadurch die Formen (K,Q,D) als Berührpunkte (x₁, y₁, x₂, y₂, x₃, y₃) erkennt, weiterhin ist eine Auswerteeinheit (KI) vorhanden, welche anhand der Touch-Sensordaten (TSD) die Information (ID) ermittelt, wobei die Auswerteeinheit (KI) anhand der erkannten Berührpunkte (x₁, y₁, x₂, y₂, x₃, y₃) die Information (ID) ermittelt, **dadurch gekennzeichnet, dass** in der Auswerteeinheit (KI) ein Algorithmus (AG) betrieben wird, welcher anhand der Touch-Sensordaten (TSD) die Objekterkennung lernt und erkannte Objekte (01,02,03) abspeichert, wobei der Algorithmus (AG) derart betrieben wird, dass eine charakteristische Beziehung (R) der Berührpunkte (x₁,y₁,x₂,y₂,x₃,y₃) zueinander ermittelt wird, wodurch es möglich wird, das Identifizierungsmittel bzw. dessen erkennbare Information (ID) anhand der charakteristischen Beziehung (R1,R2,R3) an einer beliebigen Stelle auf dem Touch-Sensor (TS) zu erkennen.

7. Erfassungssystem (100) nach Anspruch 6, wobei die Objekte (01,02,03) jeweils einen Kontaktpunkt (KP) aufweisen, und dieser Kontaktpunkt (KP) bei dem flächigen Auflegen auf den Touch-Sensor (TS) mit einem Teil einer menschlichen Hand (1) eines Bedieners berührt wird.

8. Erfassungssystem (100) nach Anspruch 6 oder 7, wobei das Bedienterminal (HMI) ein Benutzererkennungs-Mittel (BE) aufweist, um eine Benutzererkennung zu verwalten und die Erkennung eines Objektes (01,02,03) als eine Authentifizierung eines Benutzers (B1,B2,B3) auszuwerten.

9. Erfassungssystem (100) nach einem der Ansprüche 6 bis 8, wobei das Bedienterminal (HMI) ein Produktermittlungs-Mittel (PE) aufweist, um eine Produktermittlung zu verwalten und die Erkennung des Objektes (01,02,03) genutzt wird ein Produkt (P) zu ermitteln, wobei die erkannte Information (ID) als ein Produktcode (PID) ausgewertet wird.

## Claims

1. Method for detecting an object (01,02,03) on a capacitive touch sensor (TS) of an operating terminal (HMI), wherein the object (01,02,03) has an identification means, whereby detectable information (ID) is provided, wherein the identification means is detected as touch sensor data (TSD) by means of the touch sensor (TS), and the touch sensor data (TSD) is forwarded to an evaluation unit (KI), wherein the information (ID) of the identification means is ascertained in the evaluation unit (KI) on the basis of the touch sensor data (TSD),
wherein the identification means comprises a marking (P1,P2,P3) produced from a conductive material, and the marking (P1,P2,P3) has shapes (K,Q,D), which are connected by a connecting line (VL), wherein the object (01,02,03) is placed on the touch sensor (TS) in such a way that the marking (P1,P2,P3) lies flat on the touch sensor (TS), and the touch sensor (TS) thereby detects the shapes (K,Q,D) as touch points (x₁,y₁,x₂,y₂,x₃,y₃), wherein the arrangement of the shapes (K,Q,D) and therewith the detected touch points (x₁,y₁,x₂,y₂,x₃,y₃) reproduces the information (ID), **characterised in that** an algorithm (AG) is run in the evaluation unit (KI), which algorithm learns the object detection on the basis of the touch sensor data (TSD) and stores detected objects (01,02,03), wherein the algorithm (AG) is run in such a way that a characteristic relationship (R) of the touch points (x₁,y₁,x₂,y₂,x₃,y₃) to each other is ascertained, whereby it is possible to detect the identification means or its detectable information (ID) on the basis of the characteristic relationship (R1,R2,R3) at any location on the touch sensor (TS).

2. Method according to claim 1, wherein the objects (01,02,03) have one contact point (KP) respectively, and this contact point (KP) is touched by part of a human hand (1) of an operator when the object is laid flat on the touch sensor (TS) .

3. Method according to claim 1 or 2, wherein the operating terminal (HMI) is configured to manage a user detection and to evaluate the detection of an object (01,02,03) as an authentication of a user (B1,B2).

4. Method according to one of claims 1 to 3, wherein the operating terminal (HMI) is configured to manage a product ascertainment and the detection of the object (01,02,03) is used to ascertain a product (P), wherein the detected information (ID) is evaluated as a product code (PID).

5. Method according to one of claims 1 to 4, wherein a conductive ink (T) is used for the conductive material of the marking (P1,P2,P3).

6. Detection system (100) having
- an operating terminal (HMI) with a capacitive touch sensor (TS),
- an object (01,02,03),
- wherein the object (01,02,03) is embodied for placing on the touch sensor (TS) and has an identification means, which is configured for providing detectable information (ID) for the touch sensor (TS), the identification means has a marking (P1,P2,P3) having a conductive material, which has shapes (K,Q,D), which are connected by a connecting line (VL), wherein the object (01,02,03) has at least one surface (G) in which the marking (P1,P2,P3) is arranged,
wherein the touch sensor (TS) is also configured to ascertain the identification means as touch sensor data (TSD) when the object is placed on the touch sensor (TS) and the marking (P1,P2,P3) lies flat on the touch sensor (TS), and the touch sensor (TS) thereby detects the shapes (K,Q,D) as touch points (x₁,y₁,x₂,y₂,x₃,y₃),
an evaluation unit (KI) is present, moreover, which ascertains the information (ID) on the basis of the touch sensor data (TSD), wherein the evaluation unit (KI) ascertains the information (ID) on the basis of the detected touch points (x₁,y₁,x₂,y₂,x₃,y₃),
**characterised in that** an algorithm (AG) is run in the evaluation unit (KI), which algorithm learns the object detection on the basis of the touch sensor data (TSD) and stores detected objects (01,02,03), wherein the algorithm (AG) is run in such a way that a characteristic relationship (R) of the touch points (x₁,y₁,x₂,y₂,x₃,y₃) to each other is ascertained, whereby it is possible to detect the identification means or its detectable information (ID) on the basis of the characteristic relationship (R1,R2,R3) at any location on the touch sensor (TS).

7. Detection system (100) according to claim 6, wherein the objects (01,02,03) have one contact point (KP) respectively, and this contact point (KP) is touched by part of a human hand (1) of an operator when the object is laid flat on the touch sensor (TS).

8. Detection system (100) according to claim 6 or 7, wherein the operating terminal (HMI) has a user detection means (BE) in order to manage a user detection and to evaluate the detection of an object (01,02,03) as an authentication of a user (B1,B2,B3).

9. Detection system (100) according to one of claims 6 to 8, wherein the operating terminal (HMI) has a productascertaining means (PE) in order to manage a product ascertainment and the detection of the object (01,02,03) is used to ascertain a product (P), wherein the detected information (ID) is evaluated as a product code (PID).

## Revendications

1. Procédé de détection d'un objet (O1, O2, O3) sur un capteur (TS) tactile capacitif d'un terminal (HMI) d'opérateur, dans lequel l'objet (O1, O2, O3) a un moyen d'identification, grâce auquel on se procure une information (ID) détectable, dans lequel, au moyen du capteur (TS) tactile, on détecte le moyen d'identification sous la forme de données (TSD) de capteur tactile, et on achemine les données (TSD) de capteur tactile à une unité (KI) d'évaluation, dans lequel, dans l'unité (KI) d'évaluation, on détermine l'information (ID) du moyen d'identification à l'aide des données (TSD) de capteur tactile,
dans lequel le moyen d'identification comprend un dessin (P1, P2, P3) produit en une matière conductrice, et le dessin (P1, P2, P3) a des formes (K, Q, D), qui sont reliées par une ligne (VL) de liaison, dans lequel on met l'objet (O1, O2, O3) sur le capteur (TS) tactile, de manière à ce que le dessin (P1, P2, P3) s'applique en surface au capteur (TS) tactile, et le capteur (TS) tactile détecte ainsi les formes (K, Q, D) comme points (x₂, y₁, x₂, y₂, x₃, y₃) de toucher, dans lequel l'agencement des formes (K, Q, D) et ainsi les points (x₂, y₁, x₂, y₂, x₃, y₃) de toucher détectés redonnent l'information (ID),
**caractérisé en ce que** l'on fait fonctionner, dans l'unité (KI) d'évaluation, un algorithme (AG), qui apprend la détection d'objet à l'aide des données (TSD) de capteur tactile et met en mémoire des objets (O1, O2, O3) détectés, dans lequel on fait fonctionner l'algorithme (AG) de manière à déterminer une relation (R) caractéristique des points (x₂, y₁, x₂, y₂, x₃, y₃) de toucher entre eux, grâce à quoi il est possible de détecter, en n'importe quel point sur le capteur (TS) tactile à l'aide de la relation (R1, R2, R3) caractéristique, le moyen d'identification ou son information (ID) détectable.

2. Procédé suivant la revendication 1, dans lequel les objets (O1, O2, O3) ont chacun un point (KP) de contact, et on touche, par une partie d'une main (1) humaine d'un opérateur, ce point (KP) de contact, lors de l'application en surface sur le capteur (TS) tactile.

3. Procédé suivant la revendication 1 ou 2, dans lequel le terminal (HMI) d'opérateur est agencé pour gérer une détection par un utilisateur et pour évaluer la détection d'un objet (O1, O2, O3) comme une authentification d'un utilisateur (B1, B2).

4. Procédé suivant l'une des revendications 1 à 3, dans lequel le terminal (HMI) d'opérateur est agencé pour gérer une détermination de produit et on utilise la détection d'objet (O1, O2, O3) pour déterminer un produit (P), dans lequel on évalue l'information (ID) détectée sous la forme d'un code (PID) de produit.

5. Procédé suivant l'une des revendications 1 à 4, dans lequel on utilise une encre (T) conductrice comme matière conductrice du dessin (P1, P2, P3).

6. Système (100) de détection comportant
- un terminal (HMI) d'opérateur ayant un capteur (TS) tactile capacitif,
- un objet (O1, O2, O3),
- dans lequel l'objet (O1, O2, O3) est conformé pour s'appliquer au capteur (TS) tactile et a un moyen d'identification, qui est conformé pour disposer d'une information (ID) détectable pour le capteur (TS) tactile, le moyen d'identification a, à cet égard, un dessin (P1, P2, P3) comportant une matière conductrice, qui a des formes (K, Q, D), qui sont reliées par une ligne (VL) de liaison, dans lequel l'objet (O1, O2, O3) a au moins une surface (G), dans laquelle le dessin (P1, P2, P3) est disposé,
dans lequel le capteur (TS) tactile est conformé en outre pour déterminer le moyen d'identification comme données (TSD) de capteur tactile, si on applique l'objet au capteur (TS) tactile et si le dessin (P1, P2, P3) s'applique en surface au capteur (TS) tactile, et le capteur (TS) tactile détecte ainsi les formes (K, Q, D) comme points (x₂, y₂, x₂, y₂, x₃, y₃) de toucher, il est prévu en outre une unité (KI) d'évaluation, qui détermine l'information (ID) à l'aide des données (TSD) de capteur tactile, dans lequel l'unité (KI) d'évaluation détermine l'information (ID) à l'aide des points (x₂, y₂, x₂, y₂, x₃, y₃) de toucher détectés,
**caractérisé en ce que** l'on fait fonctionner, dans l'unité (KI) d'évaluation, un algorithme (AG), qui apprend la détection d'objet à l'aide des données (TSD) de capteur tactile et met en mémoire des objets (O1, O2, O3) détectés, dans lequel on fait fonctionner l'algorithme (AG) de manière à déterminer une relation (R) caractéristique des points (x₂, y₁, x₂, y₂, x₃, y₃) de toucher entre eux, grâce à quoi il est possible de détecter, en n'importe quel point sur le capteur (TS) tactile à l'aide de la relation (R1, R2, R3) caractéristique, le moyen d'identification ou son information (ID) détectable.

7. Système (100) de détection suivant la revendication 6, dans lequel les objets (O1, O2, O3) ont chacun un point (KP) de contact, et ce point (KP) de contact est, lors de l'application en surface sur le capteur (TS) tactile, touché par une partie d'une main (1) humaine d'un opérateur.

8. Système (100) de détection suivant la revendication 6 ou 7, dans lequel le terminal (HMI) d'opérateur a un moyen (BE) de détection d'un utilisateur pour gérer une détection d'un utilisateur et pour évaluer la détection d'un objet (O1, O2, O3) comme une authentification d'un utilisateur (B1, B2, B3).

9. Système (100) de détection suivant l'une des revendications 6 à 8, dans lequel le terminal (HMI) d'opérateur a un moyen (PE) de détermination de produit, afin de gérer une détermination de produit et d'utiliser la détection de l'objet (O1, O2, O3) pour déterminer un produit (P), dans lequel l'information (ID) détectée est évaluée sous la forme d'un code (PID) de produit.
